# EUROPEAN PATENT APPLICATION

(11) **EP 3 248 472 A1**
(43) Date of publication of application: **29.11.2017**
(21) Application number: 16196484.6
(22) Date of filing: 28.10.2016
(51) Int. Cl.: A23L 3/375, A23B 4/09

(54) **METHOD OF CONDITIONING AND/OR TREATING FOOD PRODUCTS**

(30) Priority: 25.05.2016 US 201662341257 P
(71) Applicant: Linde Aktiengesellschaft, 80331 München (DE)
(72) Inventor: KLINE, John C., Braselton, GA 30517 (US); SKOBEL, Robert, Rockwall, TX 75032 (US)
(74) Representative: Hofmann, Andreas

(57) **Abstract**

In order to overcome the limitations and problems that earlier methods have experienced, a method of conditioning and/or treating a food product, in particular a protein food product, includes freezing the food product with a cryogen at a temperature and for a duration sufficient to establish a frozen crust on the food product prior to any of storing, shipping, and further processing of the crusted food product.

## Description

### Technical field of the present invention

The present embodiments relate to cryogenic freezing of food products for storage and/or subsequent processing.

### Technological background of the present invention

Protein food products such as for example raw fresh poultry meat, breast meat, tenders, wings, thigh meat, drums, seafood, etc. have a portion of loss due to purging and/or weeping of the product prior to storage in containers of various sizes and during said storage, or during subsequent transport, or during further processing.

Such purge and/or weep losses are undesirable.

### Disclosure of the present invention: object, solution, advantages

Starting from the disadvantages and shortcomings as described above as well as taking the prior art as discussed into account, an object of the present invention is to overcome the limitations and problems that earlier methods have experienced.

This object is accomplished by a method comprising the features of claim 1 as well as by a method comprising the features of claim 9. Advantageous embodiments, expedient improvements and other optional features of the present invention are set forth herein and disclosed in the respective dependent claims.

The present invention basically provides for the cryogenic crust freezing for reduction of purge / weep losses and temperature of food products, in particular of protein products.

There is therefore provided herein a method of conditioning and/or treating a food product, in particular a protein product, which includes freezing the food product with a cryogen, in particular with nitrogen or with carbon dioxide, at a temperature and for a duration sufficient to establish a frozen crust on the food product, the food product being advantageously selected from the group consisting of poultry, beef, seafood, pork, other meat products, and combinations of same.

The method may expediently comprise storing the crusted food product, and may favourably comprise shipping the crusted food product after the storing.

The final temperature of the conditioned and/or treated food product may preferably be between - 3.33°C (26°F) to 4.44°C (40°F).

There is also provided herein a method of conditioning and/or treating a food product, in particular a protein product, which includes
- freezing the food product with a cryogen, in particular with nitrogen or with carbon dioxide, at a temperature and for a duration sufficient to establish a frozen crust on the food product; and
- either storing the crust frozen food product, or further processing the crust frozen food product, or a combination of the storing and the further processing,
the food product being advantageously selected from the group consisting of poultry, beef, seafood, pork, other meat products, and combinations of same.

The method may expediently comprise shipping the crusted food product after the further processing.

The final temperature of the conditioned and/or treated food product may favourably be between - 3.33°C (26°F) to 4.44°C (40°F).

### Detailed description of the present invention;

### best way of embodying the present invention

Before explaining the inventive embodiments in detail, it is to be understood that the present invention is not limited in its application to the details of construction and arrangement of parts illustrated in the accompanying drawings, if any, since the present invention is capable of other embodiments and being practiced or carried out in various ways. Also, it is to be understood that the phraseology or terminology employed herein is for the purpose of description and not of limitation.

In the following description, terms such as a horizontal, upright, vertical, above, below, beneath and the like, are to be used solely for the purpose of clarity illustrating the present invention and should not be taken as words of limitation.

A cryogen, such as for example nitrogen, is applied to for example a raw fresh meat product by cryogenic crust freezing of same prior to storage in an area used for processing the product. The area for processing the product may include known storage applications.

A method of the present embodiments includes conditioning and/or treating a protein food product by freezing the food product with a cryogen at a temperature and for a duration sufficient to establish a frozen crust on the food product; and storing the crust frozen protein food product.

The cryogen is selected from the group consisting of nitrogen and carbon dioxide.

The method may also include shipping the meat product after the storing of same.

The protein food product is selected from the group consisting of poultry, beef, seafood, pork, other meat products, and combinations of same.

Another method of the present embodiments includes conditioning and/or treating a protein food product by freezing the food product with a cryogen at a temperature and for a duration sufficient to establish a frozen crust on the food product; and further processing the crust frozen protein food product.

The present cryogenic crust freezing method embodiment provides for consistent temperature profile of the meat product when it is disposed in a storage container, and efficient use of the cryogen during the chilling process, a reduction in purge or weep loss of the product when it reaches its final destination with the customer which can be for example one day to seven days after processing, a reduction in unit shipping and container cost for the meat product in view of retaining the fluids within the meat product during such shipping, and a reduction in labor costs due to an automatic application of the cryogen crust freezing, instead of the known, more expensive manual application of chilling mediums such as water ice or CO₂ dry ice.

Application of the present method embodiments results in a final average temperature of the food product when it is collected in a storage container to be between -3.33°C (26°F) to 4.44°C (40°F). Such temperature corresponds to the USDA definition of a "fresh" food product. Temperatures of products below -3.33°C (26°F) are considered frozen products.

The present embodiments improve the storage of a fresh product such as for example a fresh food product.

The cryogenic "crusting" of the food product improves the temperature profile of same to thereby reduce weeping or seepage of the food product prior to any shipping, storing and/or further processing of the food product.

The present method embodiments can be used with raw chicken chunks, raw chicken breast trim meat, poultry tenders, wings, thigh meat, drum sticks, beef, seafood, pork and other meat products, which will benefit from the embodiments herein. Carbon dioxide (CO₂) can be used instead of nitrogen for the crust freezing discussed above.

It will be understood that the embodiments described herein are merely exemplary, and that a person skilled in the art may make variations and modifications without departing from the spirit and scope of the present invention. All such variations and modifications are intended to be included within the scope of the present invention as described herein. It should be understood that the embodiments described above are not only in the alternative, but can be combined.

## Claims

1. A method of conditioning and/or treating a food product, comprising freezing the food product with a cryogen to establish a frozen crust on the food product prior to any of storing, shipping, and further processing of said crusted food product.

2. The method according to claim 1, wherein the temperature and/or the duration are/is sufficient to establish the frozen crust on the food product.

3. The method according to claim 1 or 2, wherein the cryogen is selected from the group consisting of nitrogen and carbon dioxide.

4. The method according to at least one of claims 1 to 3, further comprising storing the crusted food product.

5. The method according to claim 4, further comprising shipping the crusted food product after the storing.

6. The method according to at least one of claims 1 to 5, wherein the food product is a protein food product.

7. The method according to at least one of claims 1 to 6, wherein the food product is selected from the group consisting of poultry, beef, seafood, pork, other meat products, and combinations of same.

8. The method according to at least one of claims 1 to 7, wherein a final temperature of the conditioned and/or treated food product is between -3.33°C (26°F) to 4.44°C (40°F).

9. A method of conditioning and/or treating a food product, comprising:
- freezing the food product with a cryogen to establish a frozen crust on the food product; and
- further processing the crusted food product.

10. The method according to claim 9, wherein the temperature and/or the duration are/is sufficient to establish the frozen crust on the food product.

11. The method according to claim 9 or 10, wherein the cryogen is selected from the group consisting of nitrogen and carbon dioxide.

12. The method according to at least one of claims 9 to 11, further comprising shipping the crusted food product after the further processing.

13. The method according to at least one of claims 9 to 12, wherein the food product is a protein food product.

14. The method according to at least one of claims 9 to 13, wherein the food product is selected from the group consisting of poultry, beef, seafood, pork, other meat products, and combinations of same.

15. The method according to at least one of claims 9 to 14, wherein a final temperature of the conditioned and/or treated food product is between -3.33°C (26°F) to 4.44°C (40°F).
